# EUROPEAN PATENT APPLICATION

(11) **EP 1 205 735 A1**
(43) Date of publication of application: **15.05.2002**
(21) Application number: 01309019.6
(22) Date of filing: 24.10.2001
(51) Int. Cl.: G01D 5/244, H01F 41/02

(54) **Magnetic encoder and method of manufacturing same**

(30) Priority: 24.10.2000 JP 2000323399
(71) Applicant: UCHIYAMA MANUFACTURING CORP., Okayama-shi, Okayama-ken 702 (JP)
(72) Inventor: Yamaguchi, Yoshihiko, Uchiyama Manufacturing Corp., Okayama 701-2221 (JP)
(74) Representative: Mounteney, Simon James

(57) **Abstract**

A method for manufacturing a magnetic encoder is disclosed. According to the method, an unvulcanized raw rubber is provided, to which a magnetic ferrite powder is added. The resulting mixture is then passed through a rolling machine or an extruding machine where the mixture is formed into a sheet blank (1) that contains the magnetic ferrite powder aligned regularly in a particular orientation, or alternatively may be passed through the extruding machine, followed by being passed through the rolling machine, where the mixture is formed into a sheet blank (1) that contains the magnetic ferrite powder aligned regularly in the particular orientation. In either case, the sheet blank (1) is then stamped across its plane direction to be formed into a ring-like sheet (11). The ring-like sheet (11) with a supplemental ring (4,41) is placed inside the metal mold (2,12), where it is compressed in the axial direction under the applied heating so that it may be vulcanized, and be joined with the supplemental ring (4,41). Finally, the vulcanized ring-like rubber sheet is magnetized so that S poles and N poles can appear alternately around its circumference. A magnetic encoder manufactured according to the method is also disclosed.

## Description

### BACKGROUND OF THE INVENTION

### Field of the Invention

The present invention relates to a magnetic encoder and a method for manufacturing such magnetic encoders, wherein the magnetic encoder may be used in conjunction with a sensor on a semiconductor chip that is placed opposite the magnetic encoder, and is capable of producing codes as represented by a sequence of pulses that are generated by the magnetic forces. More particularly, the present invention relates to a magnetic encoder that includes a supplemental or reinforcing ring member and a ring-like magnetic rubber member, wherein the magnetic rubber member may be obtained by vulcanizing a raw rubber in its unvulcanized state, so that it can have S poles and N poles magnetized alternately around its circumference. As the magnetic rubber member is firmly combined with the supplemental ring member, and the magnetic rubber member may become magnetized uniformly in its circumferential direction, the magnetic encoder can provide the strong magnetic forces when the magnetic rubber member becomes magnetized. Furthermore, the present invention provides a method for manufacturing such magnetic encoders.

### Description of the Prior Art

Conventional magnetic encoders that include a rubber material possessing magnetism have been manufactured by a number of methods, some examples of which are described below.

According to one method, a proper quantity of magnetic ferrite powder is added to a raw rubber material in its unvulcanized state (which may also be referred to as "an unvulcanized raw rubber material"), and they are mixed together. Then, the resulting mixture is formed into a rubber sheet in its unvulcanized state, by the roll-sheeting process. The unvulcanized raw rubber sheet is then cut into slit-like square strips. Each of the square strips is then joined annularly at the opposite ends thereof so that it can be formed into a ring-like rubber blank. The ring-like rubber blank thus obtained is then placed in a cavity on the metal mold, where it is compressed under the applied heating so that it can be formed into a rubber member having a round circumference. Finally, the rubber member is magnetized so that S poles and N poles may appear alternately around its circumference.

According to another method, an unvulcanized raw rubber material that contains a magnetic ferrite powder is extruded into elongated strips by using an extruding machine. Then, each of the strips is joined annularly at the opposite ends thereof temporarily so that it can be formed into a ring-like rubber blank. The ring-like rubber blank thus obtained is then placed in a cavity on the metal mold, where it is compressed under the applied heating so that it can be formed into a rubber member having a round circumference. Finally, the rubber member is magnetized so that S poles and N poles may appear alternately around its circumference. This method is widely used as it is expected to enhance the moldability and workability.

According to still another method, a raw rubber material that contains a magnetic ferrite powder is rolled into elongated sheets by using a roll machine. A rubber blank having an annular shape is stamped out from each of the sheet by using a shearing machine. The rubber blank having the annular shape is then magnetized so that S poles and N poles may appear alternately around its circumference. Finally, the rubber member thus obtained is attached to a supplemental or reinforcing ring by means of an adhesive.

The conventional methods that have been mentioned above have respective problems, which will be described below.

In the first method mentioned above, at the initial stage where the magnetic powder such as ferrite are added to the raw rubber material, and they are then mixed together, it is not considered that the magnetic powder should be aligned regularly in a particular orientation when they are magnetized. Then, when the rubber material containing such magnetic ferrite powder is magnetized, it may produce the magnetic forces that are not aligned regularly in the circumferential direction. It is therefore impossible to obtain a magnetic encoder that can provide the magnetic forces both powerfully and uniformly in the circumferential direction when it becomes magnetized.

In the second method mentioned above, although that part of the magnetic powder such as ferrite that exists on the middle of the strip may be aligned regularly in the particular orientation, the remaining part of the magnetic powder that exists at the joined ends may tend to be aligned irregularly in the circumferential direction. Therefore, it is also impossible to obtain a magnetic encoder that can provide the magnetic forces both powerfully and uniformly in the circumferential direction when it becomes magnetized.

In the third method mentioned above, the rubber ring member that has S poles and N poles magnetized alternately around its circumference is attached to the supplemental or reinforcing ring member by means of the adhesive, after the rubber ring member is magnetized. It is therefore difficult to join the two members firmly into a single unit.

### SUMMARY OF THE INVENTION

In light of the problems of the prior art methods described above, it is therefore one object of the present invention to provide a magnetic encoder that includes a rubber ring member having S poles and N poles magnetized alternately in the circumferential direction and a supplemental or reinforcing ring member, wherein the two ring members are joined firmly into a single unit, and wherein the magnetic encoder can provide the magnetic forces both powerfully and uniformly in the circumferential direction when it is magnetized.

Another object of the present invention is to provide a method for manufacturing such magnetic encoders.

According to the method of the present invention and the magnetic encoder of the present invention obtained by the said method, the magnetic encoder may be used with a sensor on a semiconductor sensor chip that is placed opposite the magnetic encoder, and may produce codes as represented by a sequence of pulses generated by the magnetic forces. The method, as well as the magnetic encoder that may be obtained by the method, will be described below in some details by referring to the accompanying drawings.

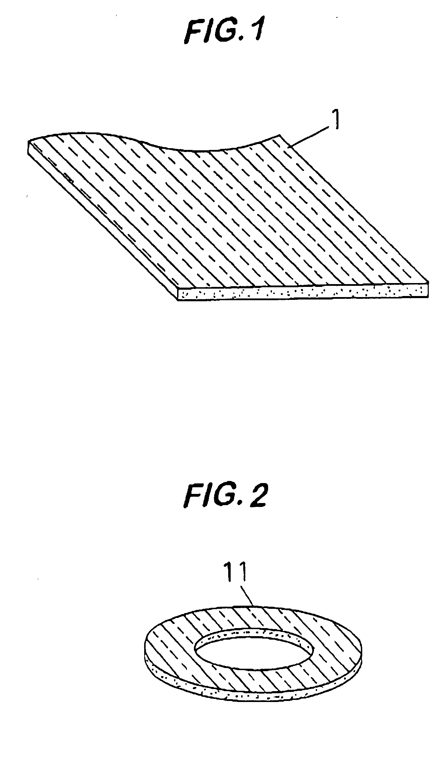

In the method for manufacturing the magnetic encoder in accordance with the present invention, an unvulcanized raw rubber material is first provided, to which a magnetic ferrite powder is added, and they are mixed together. The resulting mixture of the unvulcanized raw rubber material and magnetic ferrite powder may be passed through the rolling or extruding machine that forms it into a sheet blank 1 that contains the magnetic ferrite powder aligned regularly in the particular orientation, as shown in Fig. 1. Alternatively, a sheet blank 1 can be made by extruding the mixture using the extruding machine, then by passing the output through the rolling machine so as to form a sheet blank1. In this case, the final blank 1 that has been extruded and then passed through the rolling machine may also contain the magnetic ferrite powder aligned regularly in the particular orientation.

Next, the sheet blank 1 in either case may be stamped across its plane direction. The result is a ring-like sheet blank 11 as shown in Fig. 2.

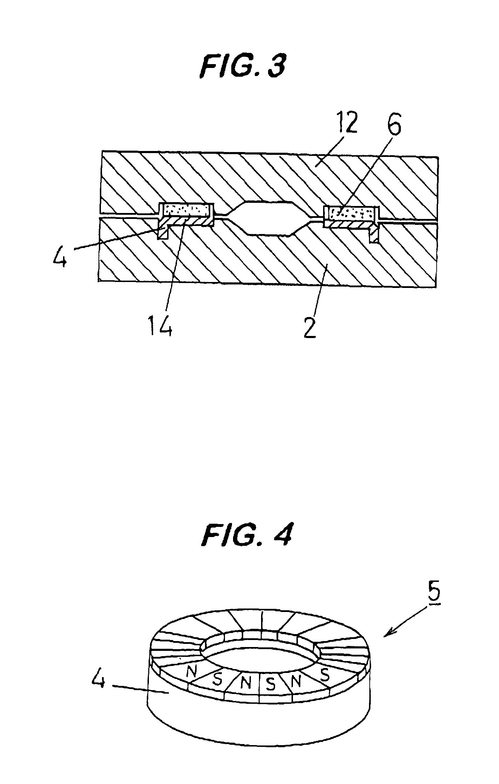

The ring-like sheet blank 11 with a supplemental or reinforcing ring 4 placed on a metal mold, specifically between the lower and upper halves 2, 12 of the metal mold as shown in Fig. 3. Then, the metal mold may be operated to compress the ring-like sheet blank 11 and supplemental ring 4 in the axial or vertical direction under the applied heating. This compression provides the vulcanizing action that forms a ring-like rubber member 6 including the ring-like sheet blank 11 and supplemental ring 4 that are joined together by the vulcanizing action.

The ring-like rubber member 6 thus obtained may then be magnetized so that S poles and N poles can appear alternately around its circumference, as shown in Fig. 4. The result is the magnetic encoder 5 according to the present invention.

In the magnetic encoder 5 that may be obtained according to the method of the present invention, the vulcanized ring-like rubber member 6, on which S poles and N poles are to be magnetized alternately in the circumferential direction, is attached to the supplemental ring 4 through the vulcanizing process. Thus, the magnetic encoder 5 obtained by the method according to the present invention includes the vulcanized ring-like rubber member 6 and supplemental ring 4 that may be joined together more firmly than when those two members are joined together by using the adhesive in the prior art method.

When a sheet blank 1 is formed according to the method of the present invention, it is very important that the sheet blank 1 should be formed so that it can have the magnetic ferrite powder aligned regularly in the particular orientation. The reason is that if the magnetic ferrite powder contained in the sheet blank 1 is aligned regularly in the particular orientation as described above, the magnetic encoder 5 that includes the vulcanized ring-like rubber member 6 derived from such sheet blank 1 can reduce any error in the magnetic pitch precision that might otherwise occur, and each of S poles and N poles that have been magnetized alternately can provide the regular magnetic flux density.

As used in this specification, the term "the error in the magnetic pitch precision" refers to any error between the actual value and the theoretical value in terms of the distance between N pole and S pole, when N pole and S pole are magnetized alternately in the circumference direction on the vulcanized ring -like rubber member 6.

By considering the above factors, it is desirable that the sheet blank 1 should be formed in any of the following manners.

When the rolling machine is used to form the sheet blank 1, it is desirable that the unvulcanized raw rubber that contains the magnetic ferrite powder should be passed through a series of rolls so that it can be formed gradually into a sheet.

When the extruding machine is used to form the sheet blank 1, it is desirable that the extruding machine should have an outlet port having a simple flat configuration.

When the extruding machine is used, it may alternatively have an outlet port having a ring-like shape, and may provide a hollow cylindrical shape output. Then, this output may be cut along the length thereof, or in the longitudinal direction. The result is an elongated sheet blank 1.

As an alternative method, it is desirable that the unvulcanized raw rubber that contains magnetic ferrite powder is first extruded by the extruding machine having the simple flat outlet configuration or the circular outlet configuration so that a flat-like output or a strip-like output may be formed, and the said flat-like output or strip-like output is then passed through the rolling machine so that the sheet blank 1 can be formed.

In any case, it is desirable that the sheet blank 1 has the thickness of between 0.1 mm and 3.00 mm, and that the magnetic ferrite powder contained in the sheet blank 1 are aligned regularly in the particular orientation. In this way, the magnetic encoder 5 that includes the vulcanized ring-like rubber 6 derived from such sheet blank 1 can reduce any error in the magnetic pitch precision that might otherwise occur, and can have S poles and N poles each of which provides a regular magnetic flux density when those poles are magnetized alternately around the circumference.

It should be noted that the sheet blank 1, which contains the magnetic ferrite powder that are aligned regularly in the particular orientation, may desirably have the thickness of between 0.1 mm and 1.00 mm. In this case, the error in the magnetic pitch precision can be further reduced, and the magnetic flux density of each of the S and N poles magnetized alternately can become more regular.

If it is requested to obtain a desired thickness, several sheet blanks 1, each of which has the thickness of between 0.1 mm and 3.00 mm, or preferably between 0.1 mm and 1.00, may be stacked one on another. Thereby, the desired thickness can be obtained.

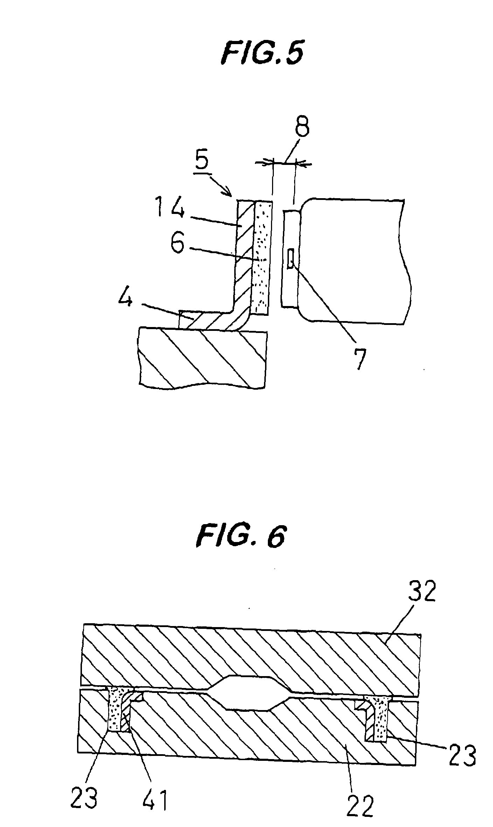

In order to measure any error in the magnetic pitch precision, the magnetic encoder 5 that is obtained as described above is tentatively placed opposite the sensor on the semiconductor sensor chip 7 by setting the gap 8 (Fig. 5) therebetween to each of the values that range between 0.5mm and 3.00 mm. In each case, it is found that the error that occurred represented less than 1.5 % of all measurements made. It is also found that each of the S and N poles provided the regular magnetic flux density.

It may be understood from the foregoing description that any of the methods described above may comprise the steps of: forming a raw rubber blank in its unvulcanized state and containing the magnetic ferrite powder into a sheet blank 1 so that it can have the thickness of between 0.1 mm and 3.00, preferably between 0.1 mm and 1.00 mm, and can have the magnetic ferrite powder aligned regularly in the particular orientation, stamping the sheet blank 1 across its plane direction into a ring-like blank 11 without disturbing the alignment of the magnetic ferrite powder as already established, and compressing the ring-like blank 11 in the axial or vertical direction under the applied heating so that the magnetic ferrite powder can flow in the plane direction, thereby causing the magnetic ferrite powder to be aligned more regularly. Those steps may interact with each other so that the magnetic encoder in which any error in the magnetic pitch precision is reduced and having S poles and N poles each of which provides a regular magnetic flux density as the before described may be obtained.

Thus, the magnetic encoder 5 manufactured according to the above steps may be used in any application that requires the magnetic pitch precision error to be limited to less than 1.5 %, when the magnetic encoder is spaced apart from the sensor on the semiconductor sensor chip 7 with the gap 8 (Fig. 5) of 0.5 to 3.00 mm therebetween.

The magnetic encoder 5 manufactured according to the above steps may also be used in any application that requires the sensor to provide analog output, since the magnetic encoder 5 can limit the magnetic pitch precision error to less than 1.5 %, and can reduce any irregular magnetic flux density for each of S and N poles when they become magnetized alternately in the circumferential direction.

In summary, the vulcanized ring-like rubber member 6 may be obtained by vulcanizing the ring-like blank 11 that contains the magnetic ferrite powder aligned regularly in the particular orientation. So that, in the vulcanized ring-like member 6, there is little irregularity in the alignment of magnetic ferrite powder. Thereby, after the vulcanized ring-like rubber member 6 is magnetized, and S poles and N poles are appeared alternately around the circumference, as shown in Fig. 4, the magnetic encoder 5 providing the powerful magnetic forces with reducing the irregularity of magnetic forces in the circumferential direction can be obtained.

The method according to the present invention allows the magnetic ferrite powder contained in the unvulcanized raw rubber to remain aligned regularly in the circumferential direction from the time when the unvulcanized raw rubber is formed into the ring-like rubber blank 11 until the time when it is joined with the supplemental ring 4 during the subsequent vulcanizing process. When the ring-like rubber member 6 thus obtained is then magnetized so that S poles and N poles may appear alternately around the circumference, it can provide the magnetic forces both powerfully and uniformly at any circumferential point. Thus, the magnetic encoder 5 including such ring-like rubber member 6 can perform very well.

As the ring-like rubber blank 11 may be joined with the supplemental ring 4 during the vulcanizing process, they can be joined together more firmly into a single unit.

### BRIEF DESCRIPTION OF THE DRAWINGS

Fig. 1 is a perspective view illustrating a formed sheet blank in accordance with one method of the present invention;
Fig. 2 is a perspective view illustrating a formed ring-like rubber blank in accordance with one method of the present invention;
Fig. 3 is a sectional view illustrating how a ring-like blank and a supplemental ring, which are placed inside the metal mold, are joined together during the vulcanizing process in accordance with one method of the present invention;
Fig. 4 is a perspective view illustrating the magnetic encoder manufactured in accordance with one method of the present invention;
Fig. 5 is a sectional view illustrating how the magnetic encoder manufactured in accordance with one method of the present invention is placed opposite the sensor on the semiconductor sensor chip, with some parts not shown; and
Fig. 6 is a sectional view illustrating how a ring-like rubber blank and a supplemental ring, which are placed inside the metal mold, are joined together during the vulcanizing process in accordance with an alternative method of the present invention.

### DETAILED DESCRIPTION OF PREFERRED EMBODIMENTS

Several preferred embodiments of the present invention are now described by reference to the accompanying drawings.

In one embodiment, a raw rubber in its unvulcanized state, or an unvulcanized raw rubber, is first provided. This unvulcanized raw rubber contains a mixture that may be composed of any one of the polymers known in the art, such as NBR (acrylonitrile butadiene rubber), ACM (acrylic acid ester copolymer) and H-NBR (hydrogen added acrylonitrile butadiene rubber), magnetic ferrite powder, and any one of the rubber agents known in the art. The magnetic ferrite powder may have the composition ratio that preferably ranges between 70 % and 98% by weight relative to the other components. If the composition ratio of the magnetic ferrite powder is less than 70%, the magnetic forces that may be provided by the final product, or the magnetic encoder manufactured according to any of the methods of the present invention, will be undesirably insufficient. Conversely, if it is more than 98 %, the unvulcanized raw rubber will become too hard, which might undesirably affect the moldability or workability during the subsequent molding process.

Examples of the magnetic ferrite powder may include strontium ferrite powder, barium ferrite powder, and a combination of strontium ferrite powder and barium ferrite powder. Which of those different ferrite powders should be chosen may be determined, depending upon the particular requirements of the magnetic encoder being manufactured, such as the performance, etc.

The unvulcanized raw rubber thus obtained may be passed through the conventional roll machine, where the unvulcanized raw rubber may be formed into a sheet blank 1 of 2mm thick and containing the magnetic ferrite powder aligned regularly in the particular orientation, as shown in Fig. 1.

Then, the sheet blank 1 may be stamped across its plane direction, specifically in the vertical direction in Fig. 1. The result is a ring-like blank 11 as shown in Fig. 2.

The physical size and dimensions of the ring-like blank 11 being formed may be determined, depending upon the particular requirements for the size and dimensions of the final product or magnetic encoder.

The stamping of the sheet blank 1 to be formed into the ring-like blank 11 may be performed by using a stamping die, cutter, press, and the like.

It should be noted, however, that the stamping or cutting should desirably occur across the plane of the sheet blank 1 in order to provide a sharp cut face, without disturbing the alignment or orientation of the magnetic ferrite powder that has previously been established in the sheet blank 1.

The ring-like blank 11 may be provided by stacking several sheet blanks one on another so that the stack can have the desired thickness, and may then be stamped (not shown).

Next, the ring-like blank 11, with a supplemental ring 4 placed below it, may be placed inside a metal mold, specifically between the lower and upper molds 2, 12 of the metal mold, where the ring-like blank 11 may be compressed in the axial direction, or in the vertical direction in Fig. 3, under the applied heating. During the compression, the ring-like blank 11 may be vulcanized, and may be joined firmly with the supplemental ring 4 into a single unit.

The compression may occur under the applied heating of between 150°C and 230°C and under the applied pressure of between 1 MPa and 200 MPa.

The supplemental ring 4 may have a flange 14 as shown in Figs. 3 and 5. In this case, the ring-like blank 11 may be joined with the supplemental ring 4 on its plane. Alternatively, a supplemental ring 41 that may have a cylindrical portion as shown in Fig. 6 may be used. In this case, the ring-like blank 11 may be joined with the supplemental ring 41 on its cylindrical portion.

Generally, each of the supplemental rings 4, 41 is made of metal, and may be used to increase the mechanical strength of the magnetic encoder.

When the supplemental ring 4 having the flange 14 as shown in Figs. 3 and 5 is used, the metal mold including the lower and upper molds 2, 12 as shown in Fig. 3 may be used to join the ring-like blank 11 with the supplemental ring 4 by compressing them under the applied heating in the axial direction or vertical direction. During the compression, the magnetic ferrite powder that has previously been aligned regularly in the ring-like blank 11 may flow in the plane direction, thus permitting the magnetic ferrite powder to be aligned or oriented more regularly.

When the supplemental ring 41 having the cylindrical portion as shown in Fig. 6 is used, the metal mold that includes the lower and upper molds 32 and 22, each having a deep cavity 23 as shown in Fig. 6, may be used. When this metal mold is used to join the ring-like blank 11 with the supplemental ring 41 on its cylindrical portion, the magnetic ferrite powder that has previously been aligned regularly in the ring-like blank 11 may fill the deep cavities 23 without disturbing the established alignment or orientation.

The ring-like rubber member 6 thus obtained may be magnetized so that N poles and S poles can appear alternately around the circumference, as shown in Fig. 4. In this way, the magnetic encoder 5 may be obtained.

### Comparison between the inventive and non-inventive magnetic encoders

The following presents the results that have been obtained by comparing the inventive magnetic encoder with the non-inventive magnetic encoder.

On one hand, samples of the inventive magnetic encoder 5 manufactured according to the method of the present invention described above are provided, which are referred to as "the inventive samples". To compare with the inventive samples, on the other hand, samples of the non-inventive magnetic encoder manufactured according to a typical prior art method are provided, which are referred to as "the non-inventive samples". The non-inventive samples are manufactured as follows. That is, an unvulcanized raw rubber that includes the same components as that for the inventive sample is used. Then, the unvulcanized raw rubber is extruded by the extruding machine to be formed into an elongated strip shape, which is then joined at the opposite ends thereof temporarily, to form a ring-like shape. The said formed ring-like shape is placed in the cavity on the metal mold, where it is compressed under the applied heating into a ring. Finally, the ring is magnetized so that S poles and N poles can appear alternately around its circumference.

For both the inventive and non-inventive samples, the compression occurred under the same conditions, such as the applied heating of 190°C and under the applied pressure of 10 MPa. The condition under which the magnetic forces were supplied for magnetization is the same for both samples.

In order to measure any error in the magnetic pitch precision for both samples, all samples of the respective magnetic encoders were placed opposite the sensor on the semiconductor sensor chip 7, with a spacing or gap 8 of 2 mm therebetween, as shown in Fig. 5. The following table below shows the results.

| Magnetic Pitch Precision Error (%) | | | |
|---|---|---|---|
| | Average Value (µ) | 3σ | µ +3σ |
| Non-inventive samples | 0.73 | 1.08 | 1.81 |
| Inventive samples | 0.36 | 0.29 | 0.65 |

In the table, σ represents the standard deviation.

It may be seen from the above results that for the inventive samples, 99.7 % of all samples have the error range of within µ + 3σ = 0.65 %, which represents half the error that occurred for the non-inventive samples.

Although the present invention has been described with reference to the preferred embodiments by referring to the drawings, it should be understood that all of the constructions, forms or shapes, and positional relationships that have been presented simply provide the conceptual basis to enable those skilled in the art to understand the present invention. It should also be understood that the specific values and material compositions that have been presented are simply given by way of example. Therefore, the present invention should not be limited to the particular embodiments described above, and various changes and modifications may be made within the scope and spirit of the invention as defined in the appended claims.

## Claims

1. A method for manufacturing a magnetic encoder wherein the magnetic encoder may be used with a sensor on a semiconductor chip that is placed opposite the magnetic encoder, and is capable of producing codes as represented by a sequence of pulses generated by the magnetic forces, the method comprising the steps of:
providing a raw rubber in its unvulcanized state;
providing magnetic ferrite powder selected from a group of a strontium ferrite powder, a barium ferrite powder, and a combination of the strontium ferrite power and barium ferrite powder;
adding said magnetic ferrite powder to said unvulcanized raw rubber and thereby providing a mixture composed of the magnetic ferrite powder and unvulcanized raw rubber;
passing said mixture composed of the magnetic ferrite powder and unvulcanized raw rubber through a rolling machine or an extruding machine and thereby providing a sheet blank that contains the magnetic ferrite powder aligned regularly in a particular orientation, or alternatively extruding said mixture composed of the magnetic ferrite powder and unvulcanized raw rubber by an extruding machine, followed by being passed through a rolling machine to be formed into a sheet blank that contains the magnetic ferrite powder aligned regularly in a particular orientation;
stamping said sheet blank across its plane direction and thereby obtaining a ring-like blank;
placing said ring-like blank with a supplemental ring in a metal mold, and compressing them in the axial direction under the applied heating so that said ring-like blank can be vulcanized into a vulcanized ring-like rubber sheet as well as it can be joined with said supplemental ring; and
magnetizing said vulcanized ring-like rubber sheet so that S poles and N poles can appear alternately around its circumference.

2. The method as defined in Claim 1, wherein the sheet blank is formed to have the thickness of between 0.1 mm and 3.00 mm.

3. A magnetic encoder manufactured according to the method defined in Claim 1 or Claim 2, wherein said magnetic encoder has the magnetic pitch precision error of less than 1.5 %, when said magnetic encoder is placed opposite a sensor on a semiconductor sensor chip, with a spacing or gap of between 0.5 mm and 3.00 mm therebetween.

4. The magnetic encoder as defined in Claim 3, wherein said magnetic encoder may be used in applications that require analog output.
